(19) **Europäisches Patentamt European Patent Office Office européen des brevets**

(11) **EP 1 717 726 B1**

(12) **EUROPEAN PATENT SPECIFICATION**

(45) Date of publication and mention
of the grant of the patent:
**16.07.2008 Bulletin 2008/29**

(51) Int Cl.:
***G06K 7/00*** (2006.01)

(21) Application number: **06007222.0**

(22) Date of filing: **05.04.2006**

(54) **Radio frequency identification reader, radio frequency identification tag, and method for identifying RFID tags**

RFID-Lesegerät, RFID-Etikett und Verfahren zur RFID-Etikettenidentifizierung

Lecteur d'identification de radiofréquence, étiquette d'identification de radiofréquence et méthode pour l'identification des étiquettes RFID

(84) Designated Contracting States:
**DE FI FR GB NL SE**

(30) Priority: **18.04.2005 KR 20050031857**

(43) Date of publication of application:
**02.11.2006 Bulletin 2006/44**

(73) Proprietor: **Samsung Electronics Co., Ltd.**
**Suwon-si, Gyeonggi-Do (KR)**

(72) Inventor: **Yang, Jin-Young**
**Gwangjin-gu**
**Seoul (KR)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 779 520**  **US-A1- 2003 151 497**
**US-B1- 6 538 563**

• **"ISO 18000-6: RFID FOR ITEM MANAGEMENT IDENTIFICATION PAR RADIOFREQUENCE (RFID) POUR LA GESTION D'OBJECTS" INTERNATIONAL STANDARD - ISO, ZUERICH, CH, no. 18000-6, 15 August 2004 (2004-08-15), pages 1-143, XP001207216**

**Description**

## BACKGROUND OF THE INVENTION

Field of the Invention

The present invention relates to a radio frequency identification reader (RFID), an RFID tag, and a system and method for identifying a tag using a bit synchronizing signal, and more particularly, to an RFID reader, an RFID tag, and a system and method for identifying a tag using a bit synchronizing signal, whereby an RFID tag is identified using the bit synchronizing signal.

Description of the Related Art

RFID technology is a kind of automatic identification and data capture (AIDC) technology, which reads data stored in a tag having a built-in microchip in a non-contact manner using a radio frequency (RF) signal.

An RFID system includes an RFID tag attached to an object and an RFID reader that reads data stored in the RFID tag. The RFID tag includes a microchip and an RF antenna. An identification code of an object and data related to the object are stored in the microchip. The RF antenna wirelessly transmits and receives data to and from the RFID reader.

The RFID system provides two types of RFID readers for identifying the RFID tag. One type identifies one RFID tag one time. This type of RFID reader can be used for a conveyer belt on which goods are sequentially moving. The other type simultaneously identifies a plurality of RFID tags. This type of RFID reader can be used for custody of goods and goods checked out at a store.

In the second type of RFID reader, a collision between response signals may occur as the plurality of RFID tags simultaneously generate the response signals. To avoid such collision, an anti-collision technique is essential. In this respect, various anti-collision techniques have been studied. Currently employed anti-collision techniques include an ALOHA type anti-collision technique and a binary type anti-collision technique. The ALOHA type anti-collision technique has a problem in that the processing speed becomes low if collision frequently occurs in an arbitration phase and an identification phase included in one slot. The ALOHA type anti-collision technique has another problem in that it takes a long time, due to an additional arbitration phase, even if collision seldom occurs in the arbitration phase and the identification phase in different slots. The binary type anti-collision technique includes a bit-by-bit mode and a binary tree mode. The binary type anti-collision technique has a problem in that it takes a long time if the ID of the RFID tag is lengthened. Although either the ALOHA type anti-collision technique or the binary type anti-collision technique is used, it is difficult to identify the number of RFID tags existing in the radio wave range of a RFID reader. Therefore, the arbitration phase is carried out with a random slot number.

In this case, if the number of RFID tags is larger than the random slot number, excessive time consumption may be caused due to collision. If the number of RFID tags is smaller than the random slot number, excessive time consumption may be caused due to a blank response.

## SUMMARY OF THE INVENTION

The present invention has been developed in order to address the above drawbacks and other problems associated with the conventional arrangements. An aspect of the present invention is to provide an RFID reader, an RFID tag, and a system and method for identifying a tag using a bit synchronizing signal, whereby a plurality of RFID tags in a radio wave range of the RFID reader can be identified more quickly using the bit synchronizing signal.

The foregoing and other aspects and advantages are substantially realized by providing an RFID reader, RFID tag or corresponding method with the features of claims 1, 5, or 7, respectively.

Advantageous embodiments are disclosed by the subclaims.

## BRIEF DESCRIPTION OF THE DRAWINGS

The above aspects and features of the present invention will be more apparent by describing certain exemplary embodiments of the present invention with reference to the accompanying drawings, in which:

FIG. 1 is a configuration view illustrating a system for identifying a tag using a bit synchronizing signal in accordance with the present invention;

FIG. 2 is a block diagram illustrating an RFID reader using a bit synchronizing signal in accordance with the present invention;

FIG. 3 is a block diagram illustrating an RFID tag using a bit synchronizing signal in accordance with the present invention;

FIG. 4 illustrates a response result of an RFID tag using a bit synchronizing signal;

FIG. 5 is a flow chart illustrating a method for identifying a tag using a bit synchronizing signal in accordance with the present invention; and

FIG. 6 is a graph illustrating effects of a method for identifying a tag using a bit synchronizing signal in accordance with the present invention.

## DETAILED DESCRIPTION OF EXEMPLARY EMBODIMENTS

Certain exemplary embodiments of the present invention will be described in greater detail with reference to the accompanying drawings.

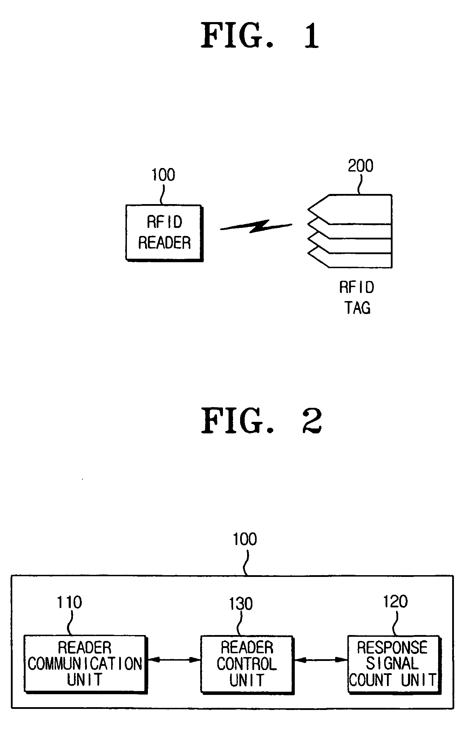

FIG. 1 is a configuration view illustrating a system for identifying a tag using a bit synchronizing signal in accordance with an exemplary embodiment of the present invention.

Referring to FIG. 1, the system for identifying a tag using a bit synchronizing signal in accordance with the present invention includes an RFID reader 100 and a plurality of RFID tags 200.

The RFID reader 100 continuously emits radio waves using an antenna. The radio waves emitted from the RFID reader 100 are transmitted to at least one RFID tag 200 existing within the radio wave range. Also, the RFID reader 100 is fixed to a radio terminal device such as a cellular phone and a personal digital assistant (PDA) and its position is varied at any time.

In an exemplary embodiment of the present invention, the RFID reader 100 transmits a transmission request signal for tag data, a bit synchronizing signal, and the number of non-collision bits to the RFID tag 200 through the antenna and receives response signals and the tag data from the RFID tag 200. The RFID reader 100 will be described later in more detail with reference to FIG. 2.

The RFID tag 200 can be fixed to various types of objects and its position can vary with time. If the RFID tag 200 is positioned within the range of the radio waves emitted from the RFID reader 100, the RFID tag 200 receives the radio waves emitted from the RFID reader 100.

In the exemplary embodiment of the present invention, the RFID tag 200 generates a random number and a random bit based on the transmission request signal transmitted from the RFID reader 100.

Also, the RFID tag 200 counts the bit synchronizing signal transmitted from the RFID reader 100, compares the counted result with the random number, and transmits a response signal through the random bit if the counted result coincides with the random number.

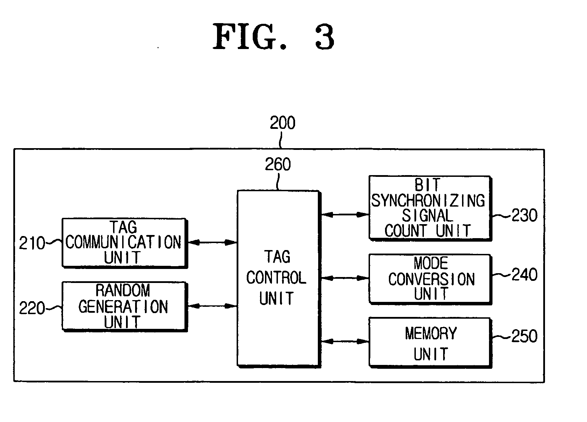

Also, the RFID tag 200 transmits the tag data to the RFID reader 100 if the number of non-collision bits transmitted from the RFID reader 100 coincides with the random number. The RFID tag 200 will be described later in more detail with reference to FIG. 3.

FIG. 2 is a block diagram illustrating an RFID reader using the bit synchronizing signal in accordance with an exemplary embodiment of the present invention.

Referring to FIG. 2, the RFID reader 100 using the bit synchronizing signal according to an exemplary embodiment of the present invention includes a reader communication unit 110, a response signal count unit 120, and a reader control unit 130.

The reader communication unit 110 transmits the bit synchronizing signal and the transmission request signal for the tag data including a generation limit of a random number to the RFID tag 200, and receives the response signal and the tag data from the RFID tag 200 to provide them to the reader control unit 120.

The response signal count unit 120 counts the response signal received through the reader communication unit 110. In this exemplary embodiment of the present invention, the response signal count unit 120 divides the response signal received through the reader communication unit 110 into the number of blank response signal bits, the number of non-collision bits having one response signal, and the number of collision bits having at least two response signals to respectively count them.

The reader control unit 130 controls the whole operation of the RFID reader 100 and also controls signal input and output between the reader communication unit 110 and the response signal count unit 120.

The reader control unit 130 controls the reader communication unit 110 to transmit the number of non-collision bits having one response signal to the RFID tag 200 depending on the count result of the response signal count unit 120.

The reader control unit 130 increases the generation limit of the random number in a predetermined range if the number of non-collision bits is 0 and the number of collision bits coincides with the generation limit of the random number. Afterwards, the reader control unit 130 generates a transmission request signal including the increased generation limit of the random number and controls the reader communication unit 110 to transmit the generated transmission request signal to the RFID tag 200.

The reader control unit 130 controls the RFID reader 100 to stop the operation of the RFID reader 100 if it is determined that the number of blank response signal bits counted by the response signal count unit 120 coincides with the generation limit of the random number, i.e., if the number of blank response signal bits coincides with the generation limit of the random number as all the RFID tags 200 do not transmit any response signal.

FIG. 3 is a block diagram illustrating the RFID tag using a bit synchronizing signal in accordance with an exemplary embodiment of the present invention.

Referring to FIG. 3, the RFID tag 200 includes a tag communication unit 210, a random generation unit 220, a bit synchronizing signal count unit 230, a mode conversion unit 240, a memory unit 250, and a tag control unit 260.

The tag communication unit 210 receives the transmission request signal for the tag data including the generation limit of the random number, the bit synchronizing signal, and the number of non-collision bits from the RFID reader 100, and transmits the transmission request signal, the bit synchronizing signal and the number of non-collision bits to the tag control unit 260.

The tag communication unit 210 transmits the tag data to the RFID reader 100 if it reaches its transmission point of the transmission request signal for the tag data from the RFID reader 100 under the control of the tag control unit 260.

The tag communication unit 210 may be an antenna provided in a conventional tag. The antenna serves to receive signals transmitted from the RFID reader 100 or transmit signals generated from the tag control unit 260. The antenna can include a coil. If the radio wave is received from the RFID reader 100, the antenna generates an induced current to provide it to the tag control unit 260.

If the transmission request signal for the tag data is received from the RFID reader 100 through the tag communication unit 210, the random generation unit 220 generates the random number within the generation limit of the random number included in the received transmission request signal and also generates a random bit of "0" or "1."

The random number generated by the random generation unit 220 is to determine its response point to the bit synchronizing signal received from the RFID reader 100 through the tag communication unit 210.

Also, the random bit generated by the random generation unit 220 is to determine types of its response signals at a response point. If collision between different response signals occurs as different types of response signals are transmitted by the random bit, it is easy to detect that a collision has occurred.

The bit synchronizing signal count unit 230 counts the bit synchronizing signal received from the RFID reader 100 through the tag communication unit 210 to determine its response point.

The mode conversion unit 240 converts a current mode of the RFID tag 200 to a predetermined mode under the control of the tag control unit 260. Examples of modes that can be converted by the mode conversion unit 240 include a normal mode, a sleep mode, and a standby mode depending on the type of the RFID tag 200.

The memory unit 250 can store a program required for the operation of the RFID tag 200 and also can store the tag data to be transmitted to the RFID reader 100 in response to the transmission request signal of the RFID reader 100. The tag data includes various kinds of information on a product (or tag owner) attached with the RFID tag 200, such as a manual of the product, personal information, and/or a tag ID. Also, the random number and the random bit generated by the random generation unit 220 can temporarily be stored in the memory unit 250.

The tag control unit 260 controls the whole operation of the RFID tag 200, and also controls signal input and output among the tag communication unit 210, the random generation unit 220, the bit synchronizing signal count unit 230, the mode conversion unit 240, and the memory unit 250.

The tag control unit 260 controls the tag communication unit 210 to transmit the response signal to the random bit generated by the random generation unit 220 to the RFID reader 100 if the bit synchronizing signal counted by the bit synchronizing signal count unit 230 coincides with the random number generated by the random generation unit 220.

The tag control unit 260 extracts the tag data stored in the memory unit 250 and controls the tag communication unit 210 to transmit the extracted tag data to the RFID reader 100 if the number of non-collision bits received through the tag communication unit 210 coincides with the random number generated by the random generation unit 220.

After controlling the tag communication unit 210 to transmit the tag data to the RFID reader 100, the tag control unit 260 controls the mode conversion unit 240 to convert the current mode to the sleep mode that does not transmit any response signal to the transmission request signal for the tag data.

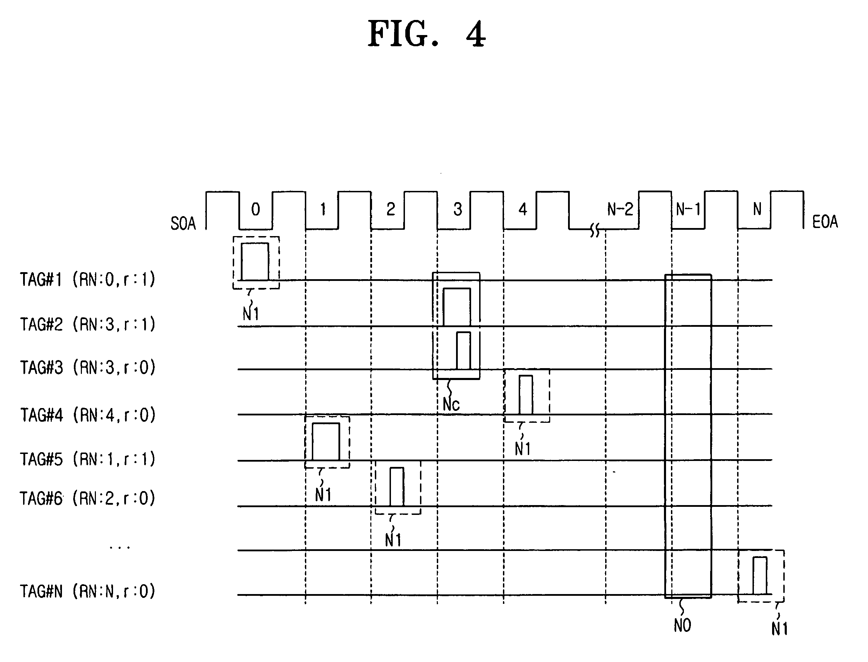

FIG. 4 illustrates the response result of the RFID tag using the bit synchronizing signal according to an exemplary embodiment of the present invention.

As described in FIG. 2, the response signal count unit 120 of the RFID reader 100 divides the response signal received through the reader communication unit 110 into the number of blank response signal bits, the number of non-collision bits having one response signal, and the number of collision bits having at least two response signals to count them, respectively.

Referring to FIG. 4, the number of blank response signal bits, the number of non-collision bits having one response signal, and the number of collision bits having at least two response signals, which are respectively counted by the response signal count unit 120, are shown according to an exemplary embodiment. In the exemplary embodiment of the present invention, a plurality of RFID tags 200, i.e., tag #1 to tag #N, that exist in the radio wave range of the RFID reader 100 are exemplarily shown.

According to an exemplary embodiment, tags #1 to #N have a respective random number RN and a respective random bit r generated by the random generation unit 220. The random number of tag #1 is "0" and its random bit is "1." The random number of tag #2 is "3" and its random bit is "1." The random number of tag #3 is "3" and its random bit is "0." The random number of tag #4 is "4" and its random bit is "0." The random number of tag #5 is "1" and its random bit is "1." The random number of tag #6 is "2" and its random bit is "0." The random number of tag #N is "N' and its random bit is "0."

If the bit synchronizing signal is transmitted to the RFID tag 200 along with a start of arbitration (SOA) signal through the reader communication unit 110 of the RFID reader 100, the RFID tag 200 counts the bit synchronizing signal through the bit synchronizing signal count unit 230 to transmit its response signal when the bit synchronizing signal corresponding to its random number is received. The RFID tag 200 transmits its response signal until an end of arbitration (EOA) signal is transmitted from the RFID reader 100.

Thus, tag #1 transmits a response signal of "1" when the 0th bit synchronizing signal is received. Tag #2 transmits a response signal of "1" when the third bit synchronizing signal is received. Tag #3 transmits a response signal of "0" when the third bit synchronizing signal is received. Tag #4 transmits a response signal of "0" when the fourth bit synchronizing signal is received. Tag #5 transmits a response signal of "1" when the first bit synchronizing signal is received. Tag #6 transmits a response signal of "0" when the second bit synchronizing signal is received. Tag #N transmits a response signal of "0" when the N-th bit synchronizing signal is received.

The number of non-collision bits having one response signal is determined by N1 obtained by tag #1 responding to the 0th bit synchronizing signal, tag #4 responding to the fourth bit synchronizing signal, tag #5 responding to the first bit synchronizing signal, tag #6 responding to the second bit synchronizing signal, and tag #N responding to the N-th bit synchronizing signal.

The number of blank response signal bits is determined by the (N-1)-th bit synchronizing signal N0 having no response among tags #1 to #N.

The number of collision bits having at least two response signals is determined by NC obtained by tags #2 and #3 responding to the third bit synchronizing signal. Although tags #2 and #3 has transmitted a response signal simultaneously, it is possible to easily detect that collision has occurred as the random bit of tag #2 is "1" and the random bit of tag #3 is "0."

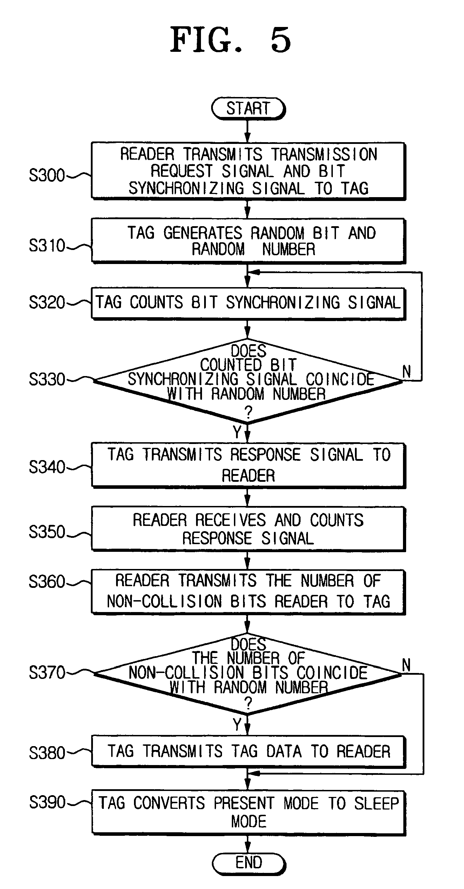

FIG. 5 is a flow chart illustrating an anti-collision technique, i.e., a method for identifying a tag using a bit synchronizing signal in accordance with an exemplary embodiment of the present invention.

The RFID reader 100 transmits the transmission request signal for the tag data including the generation limit of the random number and the bit synchronizing signal through the reader communication unit 110 to receive the tag data from the RFID tag 200 (S300).

If the transmission request signal for the tag data and the bit synchronizing signal are transmitted from the RFID reader 100, they are received in the plurality of RFID tags 200 existing in the radio wave range of the RFTD reader 100. In this case, each RFID tag 200 generates the random number within the generation limit of the random number included in the transmission request signal through the random generation unit 220 and also generates the random bit of "0" or "1" (S310).

The RFID tag 200 counts the bit synchronizing signal transmitted from the RFID reader 100 through the bit synchronizing signal count unit 230. The bit synchronizing signal is counted by the bit synchronizing signal count unit 230 until the RFID tag 200 receives the EOA signal after receiving the SOA signal (S320).

The tag control unit 260 of the RFID tag 200 determines that the bit synchronizing signal counted by the bit synchronizing signal count unit 230 coincides with the random number generated by the random generation unit 220 (S330).

In step S330, if the bit synchronizing signal coincides with the random number, the tag control unit 260 controls the tag communication unit 210 to transmit the response signal to the RFID reader 100. The tag communication unit 210 transmits the response signal to the RFID reader 100 under the control of the tag control unit 260 (S340).

The response signal transmitted from the RFID tag 200 is received through the reader communication unit 110 of the RFID reader 100. The response signal received through the reader communication unit 110 is divided by the response signal count unit 120 into the number of blank response signal bits, the number of non-collision bits, and the number of collision bits and then counted (S350).

After the number of blank response signal bits, the number of non-collision bits, and the number of collision bits are respectively counted by the response signal count unit 120 of the RFID reader 100, the reader control unit 130 controls the reader communication unit 110 to transmit the number of non-collision bits to the RFID tag 200 under the control of the reader control unit 130 (S360).

If the number of non-collision bits is transmitted from the RFID reader 100 to the RFID tag 200, the tag control unit 260 determines whether the transmitted number of non-collision bits coincides with the previously generated random number (S370).

If the transmitted number of non-collision bits coincides with the previously generated random number in step S370, the tag control unit 260 extracts the tag data stored in the memory unit 250 from the RFID tag 200 and controls the tag communication unit 210 to transmit the extracted tag data to the RFID reader 100. The tag communication unit 210 transmits the tag data to the RFID reader 100 under the control of the tag control unit 260 (S380).

After the tag data are transmitted from the RFID tag 200 to the RFID reader 100, the tag control unit 260 controls the mode conversion unit 240 to convert the current mode of the RFID tag 200 to the sleep mode. The mode conversion unit 240 converts the current mode to the sleep mode under the control of the tag control unit 260. As the current mode is converted to the sleep mode, the RFID tag 200 does not respond to the transmission request signal of the RFID reader 100 until a predetermined time passes or the sleep mode is converted to the normal mode under the control of the tag control unit 260 (S390).

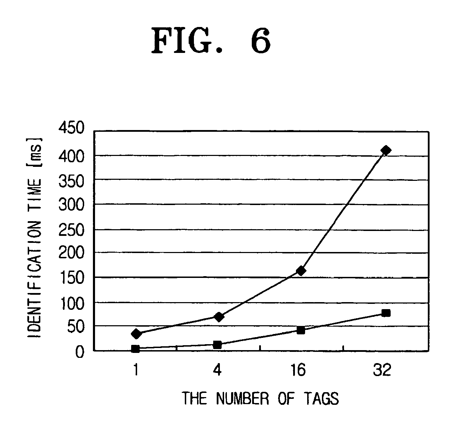

FIG. 6 is a graph illustrating effects of a method for identifying a tag using a bit synchronizing signal in accordance with an exemplary embodiment of the present invention.

Under the standard of the conventional anti-collision technique, there are an aloha type anti-collision technique including ISO 18000-6 Type A, EPC Class 1(HF), and EPC Class 1 Generation 2, and a binary type anti-collision technique including RFID Handbook, ISO 18000-6 Type B, and EPC Class 0(UHF).

The graph of FIG. 6 shows the times required to identify the same number of tags using the latest standard EPC Class 1 Generation 2 and the method for identifying a tag using the bit synchronizing signal according to an exemplary embodiment of the present invention, respectively.

The time required to identify a predetermined number of RFID tags 200 through the RFID reader 100 can be obtained by Equation (1).

$$\alpha_r^{N,n} = NB_{n,\frac{1}{N}}(r) = N\binom{n}{r}\left(\frac{1}{N}\right)^r\left(1-\frac{1}{N}\right)^{n-r} \quad \ldots\ldots(1)$$

In Equation (1), $\alpha$ represents an expected value, N represents the number of bit synchronizing signals, n represents the number of tags, B represents probability, and r represents the number of tags in one bit synchronizing signal.

The numbers of tags respectively identified by the standard EPC Class 1 Generation 2 and the tag identifying method according to the present invention are obtained for each identification time as shown in Table 1.

Table 1

| Classification | N (the number of bit synchronizing signals) | n(the number of tags)/the number of repetitions | | | |
|---|---|---|---|---|---|
| | | 1/1 | 4/2 | 16/4 | 32/7 |
| EPC C1G2 | 16 | 32.68 | 69.22 | 164.01 | 410.45 |
| Present invention | 16 | 4.19 | 12.46 | 41.30 | 77.77 |

Table 1 can be expressed by the graph of FIG. 6. Referring to Table 1 and FIG. 6, in the method for identifying a tag using the bit synchronizing signal according to the present invention, all the RFID tags 200 existing in the radio wave range of the RFID reader 100 can be identified within a time corresponding to 12% to 25% of the identification time expected by EPC Class 1 Generation 2.

In conclusion, in the method for identifying a tag using the bit synchronizing signal according to an exemplary embodiment of the present invention, the identification time per tag can be provided uniformly regardless of the number of the RFID tags 200 existing in the radio wave range of the RFID reader 100. In other words, the time required to identify the first to N-th RFID tags 200 corresponds to the time required to identify one RFID tag x N.

As described above, in the RFID reader, the RFID tag and the system and method for identifying a tag using the bit synchronizing signal according to the present invention, the plurality of RFID tags in the radio wave range of the RFID reader can be identified more quickly using the bit synchronizing signal, and the identification time per tag can be provided uniformly regardless of the number of the RFID tags.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

**Claims**

1. A radio frequency identification, RFID, reader (100) using a bit synchronizing signal, comprising:

   a reader communication unit (110) which transmits the bit synchronizing signal and a transmission request signal for tag data that includes a random number generation limit to an outside tag, receives a response signal transmitted from a tag, and receives the tag data;
   a response signal count unit (120) which at least counts the number of non-collision bits of the received response signal; and
   a reader control unit (130) which controls transmission of a number of non-collision bits having one response signal, in response to the count result of the response signal count unit (120), to the tag via the reader communication unit.

2. The RFID reader as claimed in claim 1, wherein the response signal count unit (120) divides the received response signal into a number of blank response signal bits, the number of non-collision bits having one response signal, and a number of collision bits having at least two response signals; and counts the respective numbers thereof.

3. The RFID reader as claimed in claim 2, wherein the reader control unit (130) controls an operation of the RFID reader (100) to end the operation if the number of blank response signal bits coincides with the random number generation limit.

4. The RFID reader as claimed in claim 2, wherein the reader control unit (130) increases the random number generation limit in a predetermined range if the number of non-collision bits is "0" and the number of collision bits coincides with the random number generation limit, and the reader communication unit (110) transmits the transmission request signal including the increased random number generation limit.

5. An RFID tag (200) using a bit synchronizing signal, comprising:

   a tag communication unit (210) for receiving a transmission request signal for tag data including a random number generation limit, the bit synchronizing signal, and the number of non-collision bits from an outer RFID reader;
   a random generation unit (220) which generates a random bit and a random number within the random number generation limit if the transmission request signal is received;
   a bit synchronizing signal count unit (230) which counts bits of the received bit synchronizing signal; and
   a tag control unit (260) which controls transmission of a response signal through the generated random bit if the counted bit synchronizing signal coincides with the generated random number, and transmit the tag data if the number of non-collision bits coincides with the random number.

6. The RFID tag as claimed in claim 5, further comprising a mode conversion unit (240) which converts a current mode into a sleep mode under control of the tag control unit after transmitting the tag data.

7. A method for identifying a tag using a bit synchronizing signal in an RFID system that includes a tag and a reader, the method comprising:

   transmitting the bit synchronizing signal and a transmission request signal for tag data including a random number generation limit from the reader to the tag;
   generating a random bit and a random number within the random number generation limit through the tag;
   counting bits of the bit synchronizing signal through the tag to transmit a response signal to the reader through the random bit if the counted bits of the bit synchronizing signal coincides with the generated random number;
   counting at least the non-collision bits of the response signal through the reader to transmit the number of non-collision bits having one response signal to the tag depending on the count result; and
   receiving the number of non-collision bits through the tag to transmit the tag data to the reader if the number of non-collision bits coincides with the random number.

8. The method as claimed in claim 7, wherein counting the bits of the response signal includes dividing the response signal into the number of blank response signal bits, the number of non-collision bits having one response signal, and the number of collision bits having at least two response signals to count the numbers, respectively.

9. The method as claimed in claim 7, further comprising converting a current mode into a sleep mode after transmitting the tag data through the tag.

**Patentansprüche**

1. RFID(radio frequency identification)-Leser (100), der ein Bit-Synchronisiersignal verwendet, wobei er umfasst:

   eine Leser-Kommunikationseinheit (110), die das Bit-Synchronisiersignal und ein Sende-Anforderungssignal für Tag-Daten, das eine Zufallszahl-Erzeugungsgrenze enthält, an ein externes Tag sendet, ein von einem Tag gesendetes Antwortsignal empfängt und die Tag-Daten empfängt;
   eine Antwortsignal-Zähleinheit (120), die wenigstens die Anzahl von Nicht-Kollisionsbits des empfangenen Antwortsignals zählt; und
   eine Leser-Steuereinheit (130), die Senden einer Anzahl von Nicht-Kollisionsbits mit einem Antwortsignal in Reaktion auf das Zählergebnis der Antwortsignal-Zähleinheit (120) zu dem Tag über die Leser-Kommunikationseinheit steuert.

2. RFID-Leser nach Anspruch 1, wobei die Antwortsignal-Zähleinheit (120) das empfangene Antwortsignal in eine Anzahl von Leer-Antwortsignal-Bits, die Anzahl von Nicht-Kollisionsbits mit einem Antwortsignal und eine Anzahl von Kollisionsbits mit wenigstens zwei Antwortsignalen unterteilt und die jeweilige Anzahl derselben zählt.

3. RFID-Leser nach Anspruch 2, wobei die Leser-Steuereinheit einen Betrieb des RFID-Lesers (100) so steuert, dass sie den Betrieb beendet, wenn die Anzahl von Leer-Antwortsignal-Bits mit der Zufallszahl-Erzeugungsgrenze übereinstimmt.

4. RFID-Leser nach Anspruch 2, wobei die Leser-Steuereinheit (130) die Zufallszahl-Erzeugungsgrenze in einem vorgegebenen Bereich erhöht, wenn die Anzahl von Nicht-Kollisionsbits "0" beträgt und die Anzahl von Kollisionsbits mit der Zufallszahl-Erzeugungsgrenze übereinstimmt, und die Leser-Kommunikationseinheit (110) das Sende-Anforderungssignal sendet, das die erhöhte Zufallszahl-Erzeugungsgrenze enthält.

5. RFID-Tag (200), das ein Bit-Synchronisiersignal verwendet, wobei es umfasst:

   eine Tag-Kommunikationseinheit (210) zum Empfangen eines Sende-Anforderungssignals für Tag-Daten, das eine Zufallszahl-Erzeugungsgrenze enthält, des Bit-Synchronisiersignals und der Anzahl von Nicht-Kollisionsbits von einem externen RFID-Leser;
   eine Zufalls-Erzeugungseinheit (220), die ein Zufallsbit und eine Zufallszahl innerhalb der Zufallszahl-Erzeugungsgrenze erzeugt, wenn das Sende-Anforderungssignal empfangen wird;
   eine Bit-Synchronisiersignal-Zähleinheit (230), die Bits des empfangenen Bit-Synchronisiersignals zählt; und
   eine Tag-Steuereinheit (260), die Senden eines Antwortsignals über das erzeugte Zufallsbit steuert, wenn das gezählte Bit-Synchronisiersignal mit der erzeugten Zufallszahl übereinstimmt, und die Tag-Daten sendet, wenn die Anzahl von Nicht-Kollisionsbits mit der Zufallszahl übereinstimmt.

6. RFID-Tag nach Anspruch 5, das des Weiteren eine Modus-Umwandlungseinheit (240) umfasst, die nach Senden der Tag-Daten von der Tag-Steuereinheit gesteuert einen aktuellen Modus in einen Schlafmodus umwandelt.

7. Verfahren zum Identifizieren eines Tags unter Verwendung eines Bit-Synchronisiersignals in einem RFID-System, das ein Tag und einen Leser enthält, wobei das Verfahren umfasst:

   Senden des Bit-Synchronisiersignals und eines Sende-Anforderungssignals für Tag-Daten, das eine Zufallszahl-Erzeugungsgrenze enthält, von dem Leser zu dem Tag;
   Erzeugen eines Zufallsbits und einer Zufallszahl innerhalb der Zufallszahl-Erzeugungsgrenze über das Tag;
   Zählen von Bits des Bit-Synchronisiersignals über das Tag, um ein Antwortsignal zu dem Leser über das Zufallsbit zu senden, wenn die gezählten Bits des Bit-Synchronisiersignals mit der erzeugten Zufallszahl übereinstimmen;
   Zählen wenigstens der Nicht-Kollisionsbits des Antwortsignals über den Leser, um die Anzahl von Nicht-Kollisionsbits mit einem Antwortsignal in Abhängigkeit von dem Zählergebnis zu dem Tag zu senden; und
   Empfangen der Anzahl von Nicht-Kollisionsbits über das Tag, um die Tag-Daten zu dem Leser zu senden, wenn die Anzahl von Nicht-Kollisionsbits mit der Zufallszahl übereinstimmt.

8. Verfahren nach Anspruch 7, wobei Zählen der Bits des Antwortsignals Teilen des Antwortsignals in die Anzahl von Leer-Antwortsignal-Bits, die Anzahl von Nicht-Kollisionsbits mit einem Antwortsignal und die Anzahl von Kollisionsbits mit wenigstens zwei Antwortsignalen einschließt, um die jeweilige Anzahl zu zählen.

9. Verfahren nach Anspruch 7, das des Weiteren Umwandeln eines aktuellen Modus in einen Schlafmodus nach Senden der Tag-Daten über das Tag umfasst.

**Revendications**

1. Lecteur d'identification par radiofréquence RFID (100) utilisant un signal de synchronisation de bit, comprenant :

   une unité de communication de lecteur (110) qui émet le signal de synchronisation de bit et un signal de demande d'émission pour des données d'étiquette qui comprend une limite de génération de nombres aléatoires à une étiquette extérieure, qui reçoit un signal de réponse émis à partir d'une étiquette, et qui reçoit les données d'étiquette ;
   une unité de comptage de signal de réponse (120) qui au moins comptage le nombre de bits de non-collision du signal de réponse reçu ; et
   une unité de commande de lecteur (130) qui commande l'émission d'un nombre de bits de non-collision ayant un signal de réponse, en réponse au résultat de comptage de l'unité de comptage de signal de réponse (120), à l'étiquette par l'unité de communication de lecteur.

2. Lecteur RFID selon la revendication 1, dans lequel l'unité de comptage de signal de réponse (120) divise le signal de réponse reçu en un nombre de bits de signal de réponse vierge, le nombre de bits de non-collision ayant un signal de réponse, et un nombre de bits de non-collision ayant au moins deux signaux de réponse ; et comptage les nombres respectifs de ceux-ci.

3. Lecteur RFID selon la revendication 2, dans lequel l'unité de commande de lecteur (130) commande un fonctionnement du lecteur RFID (100) pour terminer le fonctionnement si le nombre de bits de signal de réponse vierge coïncide avec la limite de génération de nombres aléatoires.

4. Lecteur RFID selon la revendication 2, dans lequel l'unité de commande de lecteur (130) augmente la limite de génération de nombres aléatoires dans un domaine prédéterminé si le nombre de bits de non-collision est égal à « 0 » et le nombre de bits de non-collision coïncide avec la limite de génération de nombres aléatoires, et l'unité de communication de lecteur (110) transmet le signal de demande d'émission comprenant la limite de génération de nombres aléatoires augmentée.

5. Étiquette RFID (200) utilisant un signal de synchronisation de bit, comprenant :

   une unité de communication d'étiquette (210) pour recevoir un signal de demande d'émission pour des données d'étiquette comprenant une limite de génération de nombres aléatoires, le signal de synchronisation de bit, et le nombre de bits de non-collision provenant d'un lecteur RFID externe ;
   une unité de génération aléatoire (220) qui génère un bit aléatoire et un nombre aléatoire dans la limite de génération de nombres aléatoires si le signal de demande d'émission est reçu ;
   une unité de comptage de signal de synchronisation de bit (230) qui comptage les bits du signal de synchronisation de bit reçu ; et
   une unité de commande d'étiquette (260) qui commande l'émission d'un signal de réponse à travers le bit aléatoire généré si le signal de synchronisation de bit compté coïncide avec le nombre aléatoire généré, et émet les données d'étiquette si le nombre de bits de non-collision coïncide avec le nombre aléatoire.

6. Étiquette RFID (200) selon la revendication 5, comprenant en outre une unité de conversion de mode (240) qui convertit un mode courant en un mode veille sous la commande de l'unité de commande d'étiquette après l'émission des données d'étiquette.

7. Procédé pour identifier une étiquette utilisant un signal de synchronisation de bit dans un système RFID qui comprend une étiquette et un lecteur, le procédé consistant à :

   émettre le signal de synchronisation de bit et un signal de demande de émission pour des données d'étiquette comprenant une limite de génération de nombres aléatoires du lecteur à l'étiquette ;

générer un bit aléatoire et un nombre aléatoire dans la limite de génération de nombres aléatoires à partir de l'étiquette ;

compter les bits du signal de synchronisation de bit à partir de l'étiquette pour émettre un signal de réponse au lecteur par le bit aléatoire si les bits comptés du signal de synchronisation de bit coïncident avec le nombre aléatoire généré;

compter au moins les bits de non-collision du signal de réponse par le lecteur pour émettre le nombre de bits de non-collision ayant un signal de réponse à l'étiquette en fonction du résultat de comptage; et

recevoir le nombre de bits de non-collision à partir de l'étiquette pour émettre les données d'étiquette au lecteur si le nombre de bits de non-collision coïncide avec le nombre aléatoire.

8. Procédé selon la revendication 7, dans lequel le comptage des bits du signal de réponse consiste à diviser le signal de réponse en le nombre de bits de signaux de réponse de vierge, le nombre de bits de non-collision ayant un signal de réponse, et le nombre de bits de non-collision ayant au moins deux signaux de réponse pour compter les nombres, respectivement.

9. Procédé selon la revendication 7, comprenant en outre la conversion d'un mode courant en un mode veille après l'émission des données d'étiquette par l'étiquette.

# FIG. 1

# FIG. 2

# FIG. 3

# FIG. 4

EP 1 717 726 B1

# FIG. 5

START

S300 — READER TRANSMITS TRANSMISSION REQUEST SIGNAL AND BIT SYNCHRONIZING SIGNAL TO TAG

S310 — TAG GENERATES RANDOM BIT AND RANDOM NUMBER

S320 — TAG COUNTS BIT SYNCHRONIZING SIGNAL

S330 — DOES COUNTED BIT SYNCHRONIZING SIGNAL COINCIDE WITH RANDOM NUMBER ? — N

Y

S340 — TAG TRANSMITS RESPONSE SIGNAL TO READER

S350 — READER RECEIVES AND COUNTS RESPONSE SIGNAL

S360 — READER TRANSMITS THE NUMBER OF NON-COLLISION BITS READER TO TAG

S370 — DOES THE NUMBER OF NON-COLLISION BITS COINCIDE WITH RANDOM NUMBER ? — N

Y

S380 — TAG TRANSMITS TAG DATA TO READER

S390 — TAG CONVERTS PRESENT MODE TO SLEEP MODE

END

# FIG. 6